# EUROPÄISCHE PATENTSCHRIFT

(11) **EP 0 950 014 B1**
(45) Veröffentlichungstag und Bekanntmachung des Hinweises auf die Patenterteilung: **06.12.2000**
(21) Anmeldenummer: 98944946.7
(22) Anmeldetag: 02.10.1998
(51) Int. Cl.: B65G 47/72, B65G 27/02, B65G 11/12, B65G 47/18, B65G 47/64

(54) **SCHWINGUNGSFÖRDERER MIT DISTRIBUTIONSWEICHE**
VIBRATING CONVEYOR WITH DISTRIBUTION CHANNEL SWITCHING SYSTEM
TRANSPORTEUR A VIBRATIONS AVEC SYSTEME DE COMMUTATION DE VOIES DE DISTRIBUTION

(30) Priorität: 05.11.1997 CH 255997
(43) Veröffentlichungstag der Anmeldung: 20.10.1999
(73) Patentinhaber: Krämer AG Bassersdorf, 8303 Bassersdorf (CH)
(72) Erfinder: ILLI, Thomas, CH-8548 Ellikon an der Thur (CH)
(74) Vertreter: Felber, Josef
(86) Internationale Anmeldenummer: CH9800420
(87) Internationale Veröffentlichungsnummer: WO9924335

(56) Entgegenhaltungen:
- EP-A- 0 549 533
- WO-A-96/26873
- FR-A- 2 537 638
- GB-A- 1 356 579
- US-A- 3 827 578

## Beschreibung

Die vorliegende Erfindung betrifft einen Schwingungsförderer, wie er in verschiedenen Ausführungen zum Fördern von Kleinteilen eingesetzt wird. Solche Schwingungsförderer arbeiten nach dem Prinzip, dass eine schraubenlinien- oder kreisförmige Bahn in eine Vibration versetzt wird, deren Bewegung im wesentlichen eine horizontale sowie eine vertikale Komponente aufweist. Bei dem zu fördernden Gut kann es sich um Kleinteile aus verschiedensten Materialien handeln, die im Verlaufe eines Produktionsprozesses zum Beispiel sortiert, geprüft, gereinigt und in Gebinde abgefüilt werden müssen. Derartig angetriebene Sortiertöpfe versetzen die darin befindlichen Kleinteile in eine Umlaufbewegung längs des Randes des Sortiertopfes, wobei nur Kleinteilchen, die sich in einer bestimmten Lage befinden, eine entsprechende Sortierpassage überwinden können, während die anderen zurück in den Sortiertopf fallen. Eine andere spezielle Ausführung eines Schwingungsförderers dient zum gleichzeitigen Entgraten und Entstauben von Komprimaten der pharmazeutischen Industrie, wie etwa Tabletten oder Pillen (EP-A-0 549 533). Solche Schwingungsförderer weisen eine Antriebseinheit aus einem Elektromagneten auf, der unter Wechselspannung gesetzt wird. Auf dessen oberer Seite ist eine Schwingplatte angeordnet, mit der die in Schwingung zu versetzenden Teile des Schwingungsförderers fest verbunden sind. Auf der gegenüberliegenden Seite des Elektromagneten ist eine hängende Gegenschwingplatte angeordnet, auf welcher der Elektromagnet höhenverstellbar befestigt ist, wobei die Schwingplatte und die Gegenschwingplatte federnd miteinander verbunden sind.

Diese federnde Verbindung besteht zum Beispiel aus um schiefwinklig zur Wickelachse des Elektromagneten angeordneten Blattfederpaketen, sodass die Schwingplatte unter Schwingung sowohl eine vertikale wie auch horizontale Schwingkomponente erhält. Die Sockelkonstruktion ist einzig über die Schwingknoten der Blattfederpakete mit dem schwingenden Teil verbunden und bleibt somit im Betrieb stationär und ist keiner Vibration ausgesetzt.

Solche Schwingungsförderer weisen bisher eine Ausschüttgosse auf, durch welche die hochgeförderten Teile in irgend ein Gebinde fallen. Im praktischen Betrieb wird das Gebinde unter der Ausschüttgosse auf eine Waage gestellt und soweit befüllt, bis das Sollgewicht erreicht ist, oder das Gebinde wird bis zu einer optischen Sollmarke befüllt. Hernach wird der Schwingungsförderer abgestellt oder die Ausschüttgosse verschlossen, bis wieder ein neues leeres Gebinde plaziert ist. Manchmal werden auch mehrere Gebinde nebeneinanderstehend hingestellt, und eine verschwenkbare Trichtereinrichtung, in welche die Kleinteile aus der Ausschüttgosse fallen, wird bei laufendem Schwingungsförderer von Hand nach dem Erreichen des Füllstandes eines ersten Gebindes zum nächsten hin geschwenkt. Nachdem eine Anzahl von Gebinden, die zum Beispiel Platz auf einer Palette finden, gefüllt sind, muss der Schwingungsförderer abgestellt werden, und zunächst muss die Palette mit den befüllten Gebinden weg transportiert und eine mit leeren Gebinden wiederum unter die Ausschüttgosse gestellt werden. Im Zuge der Automatisierung des Abfüllens von Kleinteilen wäre es wünschbar, dass der Vorgang des Befüllens einzelner Gebinde ohne manuelle Eingriffe vonstatten ginge.

Es ist daher die Aufgabe der vorliegenden Erfindung, einen Schwingungsförderer mit einer Vorrichtung für das automatische Befüllen von mehreren Gebinden zu schaffen.

Diese Aufgabe wird gelöst von einem Schwingungsförderer mit einem schraubenlinien- oder kreisförmigen Förderkanal, der mittels eines unter Wechselspannung stehenden Elektromagneten in Schwingung versetzbar ist und an seinem Ende in eine Ausschüttgosse mündet, wie es aus der EP-A-0 549 533 bekannt ist, wobei er sich dadurch auszeichnet, dass die Ausschüttgosse als Distributionsweiche ausgebildet ist, die einen elektromotorisch um eine Schwenkachse hin- und her verschwenkbarer Schüttkanal einschliesst, wobei mechanische und elektrische Steuermittel vorhanden sind, mittels derer der Schüttkanal programmgesteuert in diskrete Schwenkpositionen bringbar ist.

In den Zeichnungen ist eine vorteilhafte Ausführung dieses Schwingungsförderers mit Distributionsweiche dargestellt und nachfolgend anhand dieser Zeichnungen beschrieben, wobei die Funktion der einzelnen Teile erklärt und erläutert wird.

Es zeigt:
- Figur 1:: Den Schwingungsförderer mit Distributionsweiche und mehreren Gebinden in einer Gesamtansicht im Einsatz;
- Figur 2:: Die Distributionsweiche gesondert dargestellt;
- Figur 3:: Die Antriebs- und Steuermechanik der Distributionsweiche.

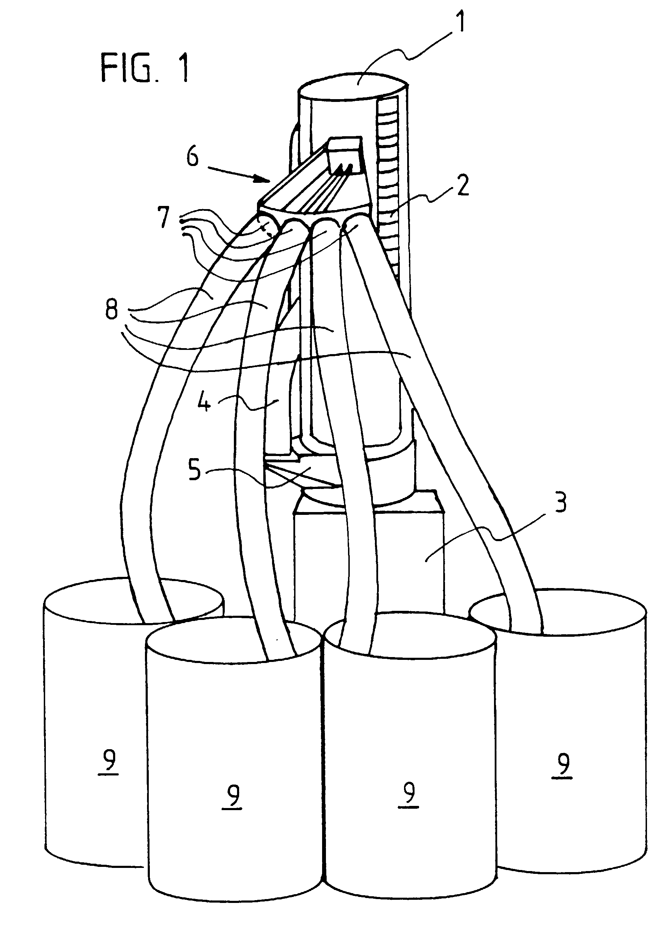

Die Figur 1 zeigt den Schwingungsförderer 1, welcher hier einen spiralförmig nach oben führenden Förderkanal 2 aufweist, der von einer zylindrischen Plexiglasverschalung eingeschlossen ist. Unterhalb der Plexiglasverschalung befindet sich die Antriebseinheit 3 mit den über Blattfederpakete verbundenen Schwingplatten und dem zwischen diesen auf der unteren Schwingplatte angeordneten Elektromagneten, der unter Wechselspannung die beiden Schwingplatten in eine Schwingung mit horizontaler und vertikaler Komponente anregt. Auf der oberen Schwingplatte ist der Förderkanal 2 befestigt. Das Gehäuse der Antriebseinheit 3 und die Plexiglasverschalung des Förderturmes bleiben vibrationsfrei, weil sie nur an den Schwingungsknoten der Blattfederpakete mit den Schwingplatten und dem Elektromagneten verbunden sind. Über das Zufuhrrohr 4 gelangen die Kleinteile in den Schwingungsförderer 1. Sie rutschen durch die Einschüttgosse 5 in den Förderkanal 2, auf welchem sie unter Einwirkung dessen Schwingung bzw. Vibration im Förderkanal 2 aufwärts wandern. Im Falle von zum Beispiel Tabletten werden diese dabei gleichzeitig entgratet und über eine zentrale Absaugeinrichtung wird der dabei anfallende Staub durch ein perforiertes Rohr, um das der Führungskanal 2 verläuft, abgesaugt. Während der Förderung überwinden die Kleinteile die Höhe von der Einschüttgosse 5 bis zur Eintrittskante an der Ausschüttgosse 6. Von da aus sollen sie nun automatisch gezielt und in vorgeschriebener Menge in bereitgestellte Gebinde 9 abgefüllt werden. Hierzu ist diese Ausschüttgosse 6 als Distributionsweiche ausgeführt. Wahlweise können die Kleinteile im gezeigten Beispiel durch vier verschiedene Austrittsöffnungen 7 in je einen Abfüllschlauch 8 gelangen, der die Kleinteile in ein entsprechendes Gebinde 9 leitet. Dieses Distributieren von ganz bestimmten Mengen der Kleinteile in verschiedene Gebinde 9 erfolgt dabei automatisch durch die programmsteuerbare und elektromechanisch betätigte Distributionsweiche 6.

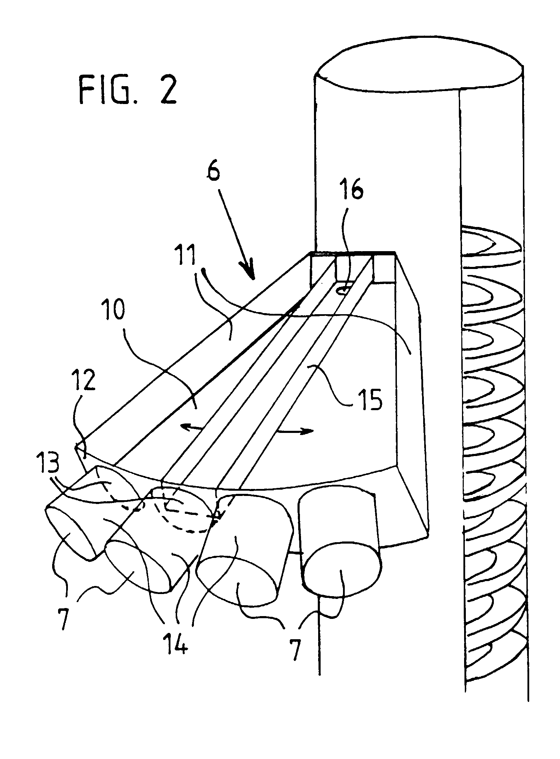

In Figur 2 ist diese Distributionsweiche 6 gesondert dargestellt. Sie weist eine kreissegmentförmige Gleitfläche 10 auf, vorzugsweise aus einem Chromstahlblech, welche hier beidseits in einen senkrecht nach oben gebogenen Rand 11 ausläuft. Auf der Vorderseite ist ein Rand 12 befestigt, der mehrere Schüttlöcher 13 aufweist, an die je eine Muffe 14 zum Anschliessen eines Abfüllschlauches angebaut ist. Der Rand 12 überlappt dabei die Gleitfläche 10 nach unten, und die Schüttlöcher 13 sind so angeordnet, dass die Gleitfläche 10 etwa auf der Höhe ihres horizontalen Durchmessers mündet. Die ganze Distributionsweiche 6 ist wie aus Figur 1 ersichtlich nach unten geneigt am Schwingungsförderer 1 angebaut. Auf der Gleitfläche 10 liegt ein Schüttkanal 15 in Form eines U-Profiles aus Chromstahl oder Kunststoff. Dieser ist oben über eine mit ihm fest verbundene Achse 16 an dem die Gleitfläche 10 bildenden Chromstahlblech angelenkt. Dieser Schüttkanal 15 kann daher um die Achse 16 geschwenkt werden, sodass seine untere Mündung wahlweise vor einem der Schüttlöcher 13 zu liegen kommt. Die von oben nach unten durch den Schüttkanal 15 gleitenden Kleinteile gelangen dabei durch das gerade angewählte Schüttloch 13 in den dort angeschlossenen Abfüllschlauch 8, wie in Figur 1 gezeigt.

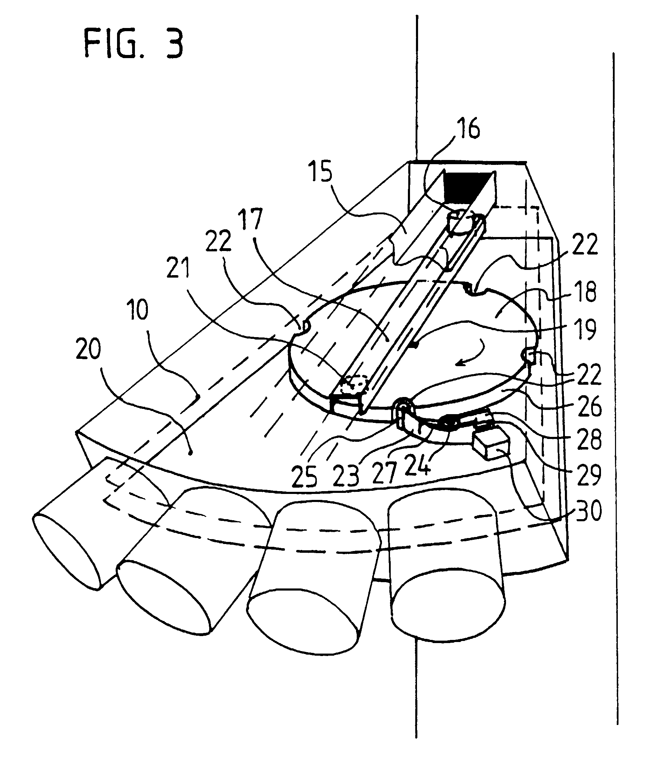

In Figur 3 ist ein Ausführungsbeispiel für die Antriebs- und Steuerungsmechanik für die Betätigung der Distributionsweiche dargestellt. Diese Figur zeigt die Eiemente der Distributionsweiche unterhalb der Gleitfläche 10, die hier nur strichliniert angedeutet ist. Auf dieser Gleitfläche 10 liegt ja der Schüttkanal 15, der hier zum Teil eingezeichnet ist. Dieser Schüttkanal 15 ist über die mitdrehende Achse 16 schwenkbar an der Gleitfläche 10 angelenkt. Unterhalb der Gleitfläche 10 verläuft parallel zum Schüttkanal 15 eine Führungsschiene 17, die ebenfalls fest an der Achse 16 angebaut ist, sodass ihre Schwenkung um die Achse 16 über dieselbe an den Schüttkanal 15 übertragen wird. Diese Führungsschiene 17 besteht aus einem U-Profil aus Chromstahl oder Kunststoff, das nach unten offen eingebaut ist. Unterhalb der Führungsschiene 17 ist liegend eine Steuerscheibe 18 um eine Achse 19 drehbar gelagert, wobei diese Achse 19 in einem unter der Steuerscheibe 18 liegenden, parallel zur Gleitfläche 10 verlaufenden Montageblech 20 gelagert ist. Die Achse 19 wird von einem Elektromotor angetrieben, der unter dem Montageblech 20 an dieses angebaut ist und hier nicht einsehbar ist. An der Peripherie weist die Steuerscheibe 18 einen Nocken 21 auf, der in die lichte Weite des die Führungsschiene 17 bildenden U-Profiles passt. Mit der Drehung der Steuerscheibe 18 umkreist der Nocken 21 die zentrale Achse 19 der Steuerscheibe 18 und nimmt dabei die Führungsschiene 17 und diese über die Schwenkachse 16 den Schüttkanal 15 mit. Um den Schüttkanal 15 wahlweise und exakt vor den einzelnen Schüttlöchern 13 anhalten zu können, ist die Steuerscheibe 18 an ihrem Umfang mit mehreren Einfräsungen 22 versehen. Eine Kontaktwippe 23 ist über die Achse 24 in der Ebene der Steuerscheibe 18 schwenkbar am Montageblech 20 montiert. An ihrem vorderen Ende weist die Kontaktwippe 23 eine Rolle 25 auf, welche beim Drehen der Steuerscheibe 18 auf deren Umfangsfläche 26 abrollt. Eine Feder 27 sorgt dafür, dass das vordere Ende der Kontaktwippe 23 mit der Rolle 25 ständig an die Umfangsfläche 26 der Steuerscheibe 18 angedrückt wird. In jede Einfräsung 22, die mit der Drehung der Steuerscheibe 18 die Rolle 25 der Kontaktwippe 23 erreicht, fällt die Rolle 25 hinein. Die damit verbundene Schwenkbewegung der Kontaktwippe 23 verursacht eine Schwenkung ihres hinteren Teils 28 nach aussen. Dabei wird ein elektrischer Kontakt 29 am Schalter 30 geschlossen. Der Reihenfolge dieser beim Drehen der Steuerscheibe 18 stattfindenden Kontakte sind die einzelnen Einstellungen des Schüttkanals 15 zugeordnet. An einer zugehörigen speicherprogrammierbaren elektrischen Steuerung SPS lässt sich ein Programm einstellen, das festlegt, wie lange zum Beispiel eine bestimmte Einstellung andauern soll und zu welchem Schüttloch 13 hernach der Schüttkanal 15 mittels Verdrehen der Steuerscheibe 18 durch den Elektromotor geschwenkt werden soll, wie lange er wieder dort verweilen soll, und zu welchem Schüttloch 13 er danach geschwenkt werden soll, usw. Zum Beispiel kann eingestellt werden, dass nacheinander die vier in Figur 1 gezeigten Schüttlöcher 13 bedient werden, und der Schüttkanal 15 bei jedem Schüttloch 13 eine bestimmte Zeitperiode verweilt, oder bis ein externes Signal den Impuls zum Weiterschwenken des Schüttkanals 15 liefert. Ein solches externes Signal kann zum Beispiel von einer Waage stammen, auf der das zu befüllende Gebinde steht, und die beim Erreichen eines bestimmten Sollgewichtes einen Impuls an die SPS der Distributionsweiche abgibt. Gleichermassen kann das Signal auch von einer Optosensorik geliefert werden, die den Füllstand in den einzelnen Gebinden misst.

Somit lässt sich ein Verteilzyklus programmieren, wonach kontinuierlich ein Gebinde befüllt wird, und danach sofort mit dem Befüllen des nächsten bereitgestellten Gebindes begonnen wird, sodass auch das Hinstellen und Entfernen des Gebindes automatisch über ein Förderband erfolgen kann, oder eine Hilfsperson nur noch die jeweils fertig befüllten Gebinde durch leere zu ersetzen braucht. Die SPS kann so programmiert werden, dass zum Beispiel der Schwingungsförderer abstellt, solange die Signale der Waagen oder der Optosensorik anzeigen, dass sämtliche Gebinde voll sind.

## Patentansprüche

1. Schwingungsförderer mit einem schraubenlinien- oder kreisförmigen Förderkanal (2), der mittels eines unter Wechselspannung stehenden Elektromagneten in Schwingung versetzbar ist und an seinem Ende in eine Ausschüttgosse mündet, *dadurch gekennzeichnet,* dass die Ausschüttgosse als Distributionsweiche (6) mit einem hin und her verschwenkbaren Schüttkanal (15) ausgebildet ist, der in radialer Richtung auf einer kreissegmentförmigen Gleitfläche (10) aufliegt und um eine die Gleitfläche (10) durchsetzende Schwenkachse (16) schwenkbar ist. sowie dass er über diese Schwenkachse (16) fest mit einer unter der Gleitfläche (10) angeordneten, unten offenen Führungsschiene (17) verbunden ist, wobei mechanische und elektrische Steuermittel (18,23,30) vorhanden sind, mittels derer der Schüttkanal (15) durch Hin- und Herbewegen der Führungsschiene (17) programmgesteuert in diskrete Schwenkpositionen bringbar ist.

2. Schwingungsförderer nach Anspruch 1, dadurch gekennzeichnet, dass der Schüttkanal (15) ein U-Profil ist, und dass die unterhalb der Gleitfläche (10) über die Schwenkachse (16) fest mit ihm verbundene, unten offene Führungsschiene (17) hin und her verschwenkbar ist, indem ein Nocken (21), der auf einer parallel zur Gleitfläche (10) und unterhalb derselben angeordneten Steuerscheibe (18) an dessen Peripherie sitzt, von unten in die Führungsschiene (17) ragt, sodass bei elektromotorischer Drehung der Steuerscheibe (18) der Nocken (21) die Führungsschiene (17) mitnimmt und hin- und herschwenkt.

3. Schwingungsförderer nach Anspruch 2, dadurch gekennzeichnet, dass die mechanischen und elektrischen Steuermittel (18,23,30) dadurch realisiert sind, dass die Steuerscheibe (18) über ihren Umfang verteilt mehrere Einfräsungen (22) aufweist, in welche eine peripher angeordnete, federbelastete Kontaktwippe (23) einschwenkt, wodurch ein Schalter (30) betätigt wird und die elektromotorische Drehung der Steuerscheibe (18) gestoppt wird, sodass damit der Schüttkanal (15) in verschiedenen Schwenklagen stoppbar ist.

4. Schwingungsförderer nach Anspruch 3, dadurch gekennzeichnet, dass die Kontaktwippe (23) auf ihrer vorderen Seite eine Roile (25) aufweist, die bei Drehung der Steuerscheibe (18) auf deren Umfangsfläche (26) abrollt und in die jeweiligen Einfräsungen (22) einrollt, wodurch ein elektrischer Kontakt geschlossen wird.

5. Schwingungsförderer nach einem der vorhergehenden Ansprüche, dadurch gekennzeichnet, dass eine speicherprogrammierbare Steuerung SPS vorhanden ist, mittels derer die Distributionsweiche so steuerbar ist, dass der Schüttkanai (15) programmgesteuert in einer wählbaren Abfolge und für eine bestimmbare jeweilige Verweilzeit in beliebige Schüttpositionen bringbar ist.

## Claims

1. Vibration conveyor with a helical or circular-shaped conveyor channel (2), which can be made to vibrate by means of an electromagnet under alternating voltage and whose end opens out into a dispensing chute, *characterized in that,* the dispensing chute is contrived as a distribution gate (6) with a dispensing channel (15) that can be pivoted to and fro, which lies on top of a circular segment-shaped smooth surface (10) in the radial direction and can be pivoted around a pivot axis (16) traversing smooth surface (10), and in that it is rigidly connected via this pivot axis (16) with a guide rail (17) that is open at the bottom and disposed underneath smooth surface (10), with mechanical and electrical control means (18,23,30) for guiding dispensing channel (15) to different positions by moving guide rail (17) to and fro in line with a program.

2. The vibration carrier of claim 1, characterized in that the dispensing channel (15) is a U-profile, and in that the downwardly open guide rail (17) to which it is rigidly connected underneath smooth surface (10) by means of pivot axis (16) can be pivoted to and fro in that a cam (21) that is mounted on the periphery of a control disk (18) disposed parallel to, and underneath, smooth surface (10), projects upwards into guide rail (17) so that when control disk (18) is rotated by the electric motor in response to mechanical and electrical control means (18,23,30), cam (21) engages guide rail (17) and moves it to and fro.

3. The vibration conveyor of claim 2, characterized in that mechanical and electrical control means (18,23,30) are contrived by control disk (18) having several recesses (22) distributed around its periphery, into which a peripherally disposed, spring-loaded contact rocker (23) pivots, thereby activating a switch (30) and stopping the rotation of control disk (18) by the electric motor, so that dispensing channel (15) can be brought to rest in different positions.

4. The vibration conveyor of claim 3, characterized in that at the front end of contact rocker (23) there is a roller (25), which, when (18) rotates, rolls around the latter's peripheral surface (26) and into respective recesses (22), thereby closing an electric contact.

5. The vibration conveyor of one of the preceding claims, characterized in that there is a memory-programmable control device (SPS) by means of which the distribution gate can be controlled so that dispensing channel (15) can be directed to any required dispensing position in line with a program, in a chosen sequence and for a set period of time.

## Revendications

1. Transporteur à secousses comportant un canal de transport (2) hélicoïdal ou circulaire, qui peut être soumis à des secousses au moyen d'un électroaimant sous tension alternative et débouche à son extrémité dans une goulotte de déversement, *caractérisé en ce que* la goulotte de déversement est réalisée sous forme d'aiguillage de distribution (6) possédant un canal de déversement (15) capable de pivoter en un va-et-vient, ce canal de déversement reposant radialement sur une surface de frottement (10) en forme de secteur circulaire et pouvant pivoter autour d'un axe de pivotement (16) traversant la surface de frottement (10), et en ce que le canal de déversement (15) est fixé, par l'intermédiaire de cet axe de pivotement (16), à une glissière (17), disposée sous la surface de frottement (10) et ouverte dans le bas, cependant que des moyens de commande mécaniques et électriques (18, 23, 30) sont disposés, au moyen desquels le canal de déversement (15), soumis à une commande programmée, peut être amené, par va-et-vient de la glissière (17), dans des positions discrètes de pivotement.

2. Transporteur à secousses suivant la revendication 1, caractérisé en ce que le canal de déversement (15) est un profilé en U et que la glissière (17) ouverte dans le bas, disposée au-dessous de la surface de frottement (10) et fixée par l'intermédiaire de l'axe de pivotement (16) au canal de déversement (15) peut pivoter en un va-et-vient, du fait qu'un doigt (21) est disposé sur un disque de commande (18) et à sa périphérie, ce disque étant placé parallèlement à la surface de frottement (10), au-dessous de celle-ci, le doigt (21) pénétrant par en bas dans la glissière (17), de sorte que, quand il se produit une rotation motorisée du disque de commande (18), le doigt (21) entraîne la glissière (17) et lui fait subir un pivotement en va-et-vient.

3. Transporteur à secousses suivant la revendication 2, caractérisé en ce que les moyens de commande mécaniques et électriques (18, 23, 30) sont réalisés en ce que le disque de commande (18) présente, réparties sur son pourtour, plusieurs concavités (22), dans lesquelles pénètre par pivotement un balancier (23) à contact, disposé à la périphérie et soumis à l'action d'un ressort, ce qui actionne un commutateur (30) et arrête la rotation motorisée du disque de commande (18), de sorte que le canal de déversement (15) peut être arrêté dans différentes positions de pivotement.

4. Transporteur à secousses suivant la revendication 3 caractérisé en ce que le balancier à contact (23) comporte sur sa partie antérieure un galet (25), qui, au moment de la rotation du disque de commande (18), roule sur son pourtour (26) et pénètre dans les concavités (22) correspondantes, ce qui établit un contact électrique.

5. Transporteur à secousses suivant une des revendications précédentes, caractérisé en ce qu'il est installé un automate programmable industriel API, au moyen duquel l'aiguillage de distribution est commandé de sorte que le canal de déversement (15), soumis au programme de commande correspondant, peut être amené en toutes positions voulues de déversement, suivant un cycle sélectionné et pour un temps de séjour chaque fois déterminable.
